# EUROPÄISCHE PATENTSCHRIFT

(11) **EP 1 452 290 B1**
(45) Veröffentlichungstag und Bekanntmachung des Hinweises auf die Patenterteilung: **12.04.2006**
(21) Anmeldenummer: 04004110.5
(22) Anmeldetag: 24.02.2004
(51) Int. Cl.: B29B 13/02, B29B 7/16, B01F 7/16

(54) **Verfahren und Vorwärmeinrichtung zur Herstellung von Duroplastteilen**
Method and preheating device for the manufacture of thermosetting parts
Procédé et dispositif de préchauffage pour la fabrication de pièces thermodurcissables

(30) Priorität: 25.02.2003 DE 10308207
(43) Veröffentlichungstag der Anmeldung: 01.09.2004
(73) Patentinhaber: Viebahn, Ulrich, Dr.-Ing., 51647 Gummersbach (DE)
(72) Erfinder: Viebahn, Ulrich, Dr.-Ing., 51647 Gummersbach (DE)
(74) Vertreter: von den Steinen, Axel

(56) Entgegenhaltungen:
- DE-A- 2 837 916
- DE-A- 3 043 463
- DE-B- 1 258 836
- DE-B- 1 270 536
- DE-C- 729 158
- DE-C- 752 179
- US-A- 2 368 977
- US-A- 4 357 111

## Beschreibung

Die Erfindung betrifft ein Verfahren zur Herstellung von Duroplastteilen aus einer vor- oder unvernetzten, pulverförmigen oder granulatförmigen Duroplastmasse. Weiterhin betrifft die Erfindung eine Vorwärmeinrichtung zur Vorwärmung einer vor- oder unvernetzten, pulverförmigen oder granulatförmigen Duroplastmasse bei der Herstellung von Duroplastteilen.

Verfahren die der Herstellung von Duroplastteilen dienen sind aus dem Stand der Technik bekannt.

Die DE 198 52 566 A1 offenbart ein Verfahren zur Herstellung von Duroplastteilen. Dabei wird Granulat bzw. Pulver dosiert und in Tablettenform verpresst. Danach wird die Tablette zur Weiterverarbeitung erwärmt, bevor sie einem Pressvorgang zur Bildung von Fertigteilen unterzogen wird. Es ist vorgesehen, dass jeweils die Zuführung einer Tablette zur Weiterverarbeitung und die Entnahme einer zum Fertigteil verarbeiteten Tablette zeitgleich erfolgt, und dass vor der Zuführung in die Presse die Erwärmung hinsichtlich der Temperatur und der Erwärmungszeit überwacht wird.

Die CH 391 275 offenbart ein Verfahren und eine Einrichtung zum Vorwärmen von duroplastischen Kunststofftabletten in einer elektrischen Hochfrequenzheizanlage. Dabei werden Tabletten in einem gesteuerten Bewegungsablauf in Pakete von wählbarer Größe gestapelt, diese Pakete in die Hochfrequenzheizanlage gebracht, darin erwärmt und nachher der Spritzpressform zugeführt. Nachteilig an diesen bekannten Verfahren ist jedoch, dass sich durch die Vorwärmung zur Tablettenform auf der Oberseite bzw. Unterseite der Tablette eine Hautschicht bildet. Diese Hautschicht ist oftmals noch in den fertig gepressten Produkten zu erkennen.

Aus der DE 752 179 C ist ein Verfahren zum Vorwärmen von Pressmassen aus härtbaren Kunstharz bekannt. Die Pressmasse wird dabei am Scheitelpunkt auf den Umfang einer beheizbaren Walze geleitet und beim Umlauf der Walze erwärmt. Die lose auf der Walzenoberfläche aufliegende Pressmasse fällt von der Walze in ein darunter aufgestelltes Auffanggefäß und wird dann weiterverarbeitet.

Nachteilig an diesem bekannten Verfahren ist es, dass die Vorwärmung sehr ungleichmäßig ist, so dass die Pressmassen mit unterschiedlich starker Vorvernetzung weiterverarbeitet werden muss.

Aus der US 2 368 977 A ist ein Rührtopf mit einem darin rotatorisch antreibbaren Rührflügel bekannt, mit dem ein temperaturhartendes Material durchmischt werden kann. Zur Erwärmung des Materials ist an der Unterseite des Rührtopfes ein Gasbrenner vorgesehen. Mittels eines Schiebers kann eine Ausnehmung an der Unterseite des Rührtopfes geöffnet werden, um das temperaturhärtende Material in den Rührtopf nachzufördern.

Nachteilig an dieser Vorrichtung ist es, dass eine genaue Dosierung des im Rührtopf zu erwärmenden Materials nicht möglich ist.

Aufgabe der vorliegenden Erfindung ist deshalb, die Nachteile der bekannten Verfahren durch den Vorschlag eines neucn Verfahrens zu vermeiden. Weiterhin ist es Aufgabe der Erfindung, eine für die Durchführung des erfindungsgemäßen Verfahrens geeignete Vorwärmeinrichtung vorzuschlagen.

Diese Aufgabe wird durch ein Verfahren mit den Merkmalen des Anspruchs 1 bzw. eine Vorwärmeinrichtung nach Anspruch 7 gelöst.

Vorteilhafte Ausführungsformen der Erfindung sind Gegenstand der Unteransprüche.

Das erfindungsgemäße Verfahren ist durch die Abfolge der folgenden Verfahrensschritte gekennzeichnet:
a) Zunächst wird der Vorwärmvorrichtung aus einer vorgeschalteten Dosiereinrichtung exakt die Menge an Duroplastmasse zur Vorwärmung zugeführt wird, die der Menge an Duroplastmasse (06) entspricht, die beim nachfolgenden Aushärten in der Form benötigt wird..
b) Anschließend wird die Duroplastmasse zeitgleich zur Vorwärmung mit einer Mischeinrichtung durchmischt, wobei die Endvorwärmtemperatur weniger als 30°C unterhalb der Vernetzungsstarttemperatur liegt.

Erfindungsgemäß entspricht die Menge der in der Vorwärmvorrichtung vorgewärmten Duroplastmasse exakt der Menge an Duroplastmasse, die beim nachfolgenden Aushärten in der Form benötigt wird. Dadurch wird verhindert, dass mehr Duroplastmasse vorgewärmt wird, als anschließend auch sofort weiterverarbeitet werden kann.

Während des Vorwärmens wird die eingefüllte Duroplastmasse ständig umgewälzt und somit eine homogene Wärmeverteilung innerhalb der Masse erreicht.

Am Ende des Vorwärmens wird die Vorwärmeinheit geöffnet und die aufbereitete Masse zur Presse weitergefördert.

Mit dieser Vorgehensweise wird erreicht, dass sich bei der Duroplastmasse, durch Erhitzen und gleichzeitiges konstantes Vermischen, keine Hautbildungen oder sonstige Verfestigungen ergeben, die die nachfolgenden Arbeitsschritte behindern oder zu einem Qualitätsverlust am herzustellenden Produkt führen.

Das Verfahren sieht weiterhin vor, dass die Endvorwärmtemperatur in einem Bereich von weniger als 5°C bis 30°C unterhalb der Vernetzungsstarttemperatur liegt.

Die Vernetzungsstarttemperatur der Duroplastmasse ist abhängig vom verwendeten Harzsystem und kann beispielsweise bei ungefähr 70°C liegen, so dass sich dann eine Endvorwärmtemperatur in einem Bereich von beispielsweise 55°C bis 60°C ergibt.

Weiterhin ist das Verfahren dadurch gekennzeichnet, dass die Vorwärmtemperatur der Duroplastmasse in einem Regelkreis auf einen Sollwert bzw. eine Sollwertkurve gesteuert bzw. geregelt wird. Dies gewährleistet eine konstante Einhaltung der vorgewählten Temperatur und damit optimale Vorraussctaungen für die Weiterverarbeitung der Duroplastmasse.

Der Erfindung liegt weiterhin eine Vorwärmeinrichtung zur Vorwärmung einer vor- oder unvernetzten, pulverförmigen oder granulatförmigen Duroplastmasse bei der Herstellung von Duroplastteilen zugrunde, welche aus der pulverförmigen oder granulatförmigen Duroplastmasse nach der Vorwärmung in einer Form unter Zufuhr von Wärme verpresst und durch Vernetzung ausgehärtet werden kann, wobei an der Vorwärmeinrichtung eine Steuer- und/oder regelbare Heizeinrichtung zur Aufheizung der Duroplastmasse und eine Mischeinrichtung zur gleichmäßigen Durchmischung der Duroplastmasse vorgesehen ist.

Erfindungsgemäß ist der Vorwärmeinrichtung eine Dosiereinrichtung zur Dosierung der in die Vorwärmeinrichtung eingebrachten Duroplastmasse vorgeschaltet.

Vorzugsweise ist die Mischeinrichtung der Vorwärmeinheit in der Art eines Rührwerks ausgebildet.

Dieses Rührwerk wiederum weist zumindest einen Rührflügel auf, mit dem die Duroplastmassc gleichmäßig durchmischt werden kann. Während des Presszyklus wird die eingefüllte Duroplastmasse ständig umgewälzt und somit eine homogene Wärmeverteilung innerhalb der Masse erreicht. Hautbildungen oder Verhärtungen der Duroplastmasse können so vollständig vermieden werden.

Außerdem kann der Rührflügel in einer Ausführungsform so ausgebildet sein, dass Bereiche des Rührflügels oder aber der ganze Rührflügel beheizbar sind. Bei dieser Ausführungsform könnte unter Umständen auf weitere Heizeinrichtungen am Rührwerk verzichtet werden.

Vorteilhafterweise weist der Rührflügel zumindest eine Ausnehmung zum Durchtritt der Duroplastmasse auf. Diese Ausnehmung fördert das gleichmäßige Durchmischen der Duroplastmasse und gewährleistet, dass alle Bereiche der Duroplastmasse vom Rührflügel erfasst werden.

Vorzugsweise ist der Rührflügel des Rührwerks spiralförmig ausgebildet, so dass alle Bereiche der Duroplastmasse gut durchmischt werden können, so dass sich ein gleichmäßig verteiltes Spektrum der Verweilzeiten der einzelnen Harzkörnchen an der beheizten Wandung ergibt.

Bei einer anderen Variante wird der Rührflügel von einem zylinderförmigen Bolzen und einem zu diesem Bolzen mittig versetzten Steg gebildet. Dieser Steg schließt mit seiner Außenkante an der Innenwandung des Rührbehälters an. Die Drehgeschwindigkeit mit der der Rührflügel im Rührwerk antreibbar ist, sollte vorzugsweise in einem Stellbereich frei wählbar sein.

Weiterhin kann die Rotationsachse des Rührflügels gegenüber der Vertikalen um einen bestimmten Neigungswinkel geneigt sein. Vorzugsweise liegt dieser Neigungswinkel bei ungefähr 45°. Die Neigung des Rührwerks um ungefähr 45° bewirkt, dass sich die Duroplastmasse möglichst großflächig im Rührwerk ausbreiten kann und damit eine gute Wärmeverteilung und Mischbarkeit der Duroplastmasse erreicht wird.

Um ein Verkleben der Duroplastmasse an den Metallflächen des Rührwerks zu vermeiden, kann die Vorwärmeinrichtung im Kontaktbereich mit der Duroplastmasse zumindest bereichsweise mit einer Antihaftbeschichtung versehen werden.

Die Antihaftbeschichtung wird vorzugsweise durch Nitrierung der Metalloberflächen hergestellt. Durch Nitrierung der Kontaktflächen wird außerdem gleichzeitig ein Verschleißschutz der Metalloberflächen erreicht. Somit kann von einer längeren Lebensdauer der einzelnen Komponenten ausgegangen werden.

Weiterhin kann die Vorwärmeinrichtung mit einem Sensor zur direkten Messung der Temperatur in der Duroplastmasse vorgesehen sein. Dieser Sensor kann geschützt in der Wandung der Vorwärmeinrichtung integriert sein und mündet im Inneren des Rührwerks, mit direktem Kontakt, zur Duroplastmasse.

Im Folgenden wird die Erfindung anhand zweier Ausführungsbeispiele näher erläutert.

Es zeigen:
- **Fig. 1**: eine erste Ausführungsform einer schematisch dargestellten Vorwärmeinrichtung im Querschnitt;
- **Fig. 2**: eine zweite Ausführungsform einer Vorwärmeinrichtung im Füllbetrieb;
- **Fig. 3**: die Vorwärmeinrichtung gemäß Fig. 2 im Mischbetrieb;
- **Fig. 4**: die Vorwärmeinrichtung gemäß Fig. 2 und Fig. 3 im Abfüllbetrieb.

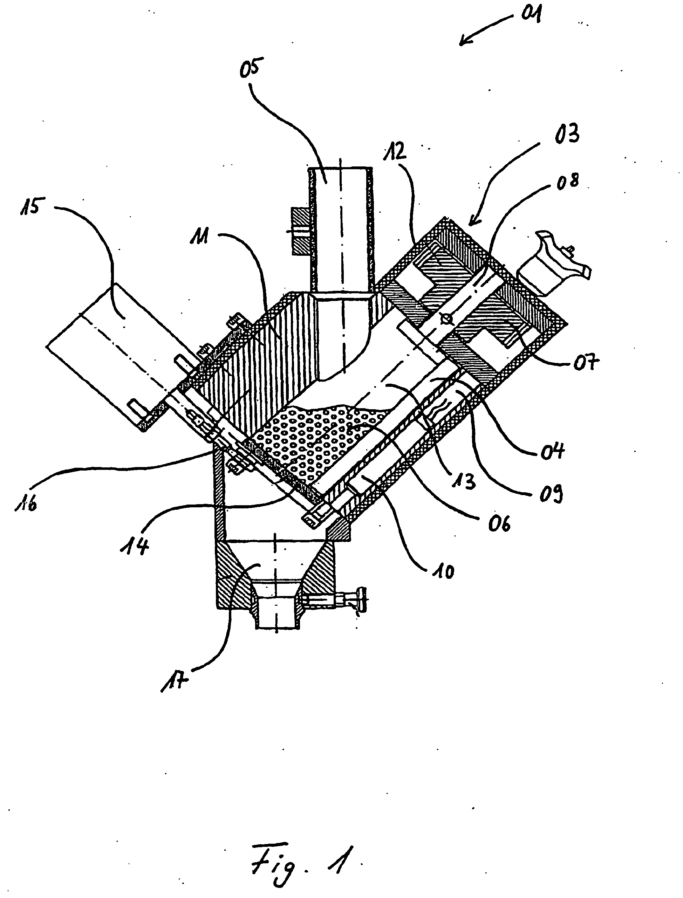

**Fig. 1** zeigt eine erste Ausführungsform einer erfindungsgemäßen Vorwärmeinrichtung 01. Über einen Füllstutzen 05 kann die Duroplastmasse 06 in eine Füllkammer 13 des Rührwerks 03 gefüllt werden. In der Füllkammer 13 befindet sich ein Rührflügel 04 der die Duroplastmasse 06 durchmischt. Der Rührflügel 04 wird von einem Zahnrad 07, das über einem Bolzen 08 mit dem Rührflügel 04 verbunden ist, angetrieben. In einer Nebenkammer 09 des Rührwerks 03 ist eine Heizpatrone 10 integriert. Diese Heizpatrone 10 ermöglicht, dass der Vorwärmblock 11 und damit die Duroplastmasse 06 auf eine bestimmte Temperatur erhitzt werden können. Das Rührwerk 03 ist an seinen Außenwänden mit einer Isolierung 12 versehen, um die aufgebaute Wärme besser speichern zu können. Soll die Duroplastmasse 06 zur Weiterverarbeitung aus der Füllkammer 13 gelassen werden, so ist der Sperrschieber 14 zu betätigen. Dieser Sperrschiebcr 14 ist über einen Hebelmechanismus 16 mit einer Zylindereinheit 15 verbunden. Durch Betätigen der Zylindereinheit 15 wird der Speirschieber 14 zurückgezogen und ermöglicht somit das Austreten der Duroplastmasse 06. Die austretende Duroplastmasse 06 gelangt in einen Ausfalltrichter 17, welcher unter dem Rührwerk 03 angeordnet ist.

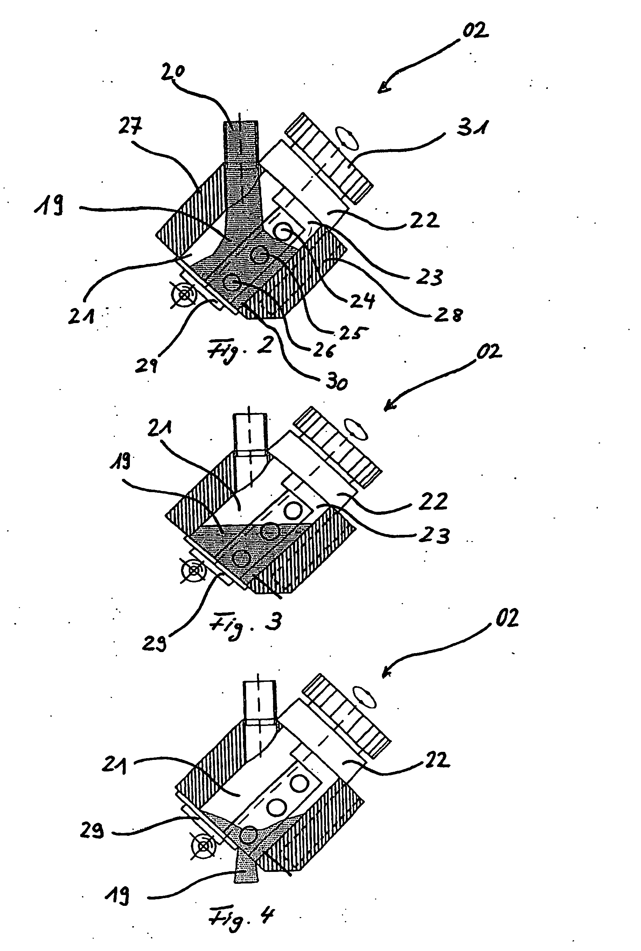

**Fig. 2** zeigt eine zweite Ausführungsform einer Vorwärmeinrichtung 02. Die Duroplastmasse 19 wird über den Füllstutzen 20 in die Füllkammer 21 des Rührwerks 22 gefüllt. Bei dieser Ausführungsform weist der in der Füllkammer 21 laufende Rührflügel 23 drei Ausnehmungen 24, 25 und 26 auf, durch die ein besseres Durchmischen der Duroplastmasse 19 erreicht wird. Im Vorwärmblock 27 ist eine Aussparung 28 vorgesehen, in der ein Heizelement zur Anlage kommen kann. Der Sperrschieber 29 verhindert das Austreten der Duroplastmasse 19 während der Befüllung. Mit einem in dem Vorwärmblock 27 angeordneten Sensor 30, der direkten Kontakt zur Duroplastmasse 19 hat, kann die Temperatur der Duroplastmasse 19 gemessen werden. Der Rührflügel 23 wird bei dieser Ausführungsform von einem Zahnrad 31 angetrieben.

**Fig. 3** zeigt die Vorwärmeinrichtung 02 gemäß **Fig. 2** im Mischbetrieb. Die Duroplastmasse 19 ist komplett in die Füllkammer 21 des Rührwerks 22 gefüllt worden. Mit dem Rührflügel 23 wird die Duroplastmasse 19 durchmischt. Der Sperrschiebcr 29 ist geschlossen.

**Fig. 4** zeigt die Vorwärmeinrichtung 02 gemäß **Fig. 2** und **Fig. 3** im Abfüllbetrieb. Der Sperrschieber 29 ist geöffnet. Die Duroplastmasse 19 kann durch eine Öffnung aus der Füllkammer 21 des Rührwerks 22 fließen. Nachdem die Duroplastmasse 19 komplett aus der Füllkammer 21 geflossen ist wird der Sperrschieber 29 wieder geschlossen.

## Patentansprüche

1. Verfahren zur Herstellung von Duroplastteilen aus einer vor- oder unvernetzten, pulverförmigen oder granulatförmigen Duroplastmasse (06,19), wobei die pulverförmige oder granulatförmige Duroplastmasse (06,19) in einer Form unter Zufuhr von Wärme verpresst und durch Vernetzung ausgehärtet wird, wobei die pulverförmige oder granulatförmige Duroplastmasse (06,19) vor dem Verpressen in einer Vorwärmeinrichtung (01,02) durch Zufuhr von Wärme bis auf eine Endvorwärmtemperatur aufgeheizt wird und die Duroplastmasse (06,19) zeitgleich zur Vorwärmung mit einer Mischeinrichtung durchmischt wird,
**dadurch gekennzeichnet,**
**dass** der Vorwärmvorrichtung (01, 02) aus einer vorgeschalteten Dosiereinrichtung exakt die Menge an Duroplastmasse (06) zur Vorwärmung zugeführt wird, die der Menge an Duroplastmasse (06) entspricht, die beim nachfolgenden Aushärten in der Form benötigt wird und die Endvorwärmtemperatur weniger als 30°C unterhalb der Vernetzungsstarttemperatur liegt.

2. Verfahren nach Anspruch 1,
**dadurch gekennzeichnet,**
**dass** die Endvorwärmtemperatur weniger als 20°C unterhalb der Vernctzungsstarttemperatur liegt.

3. Verfahren nach Anspruch 1 oder 2,
**dadurch gekennzeichnet,**
**dass** die Endvorwärmtemperatur weniger als 10°C unterhalb der Vernetzungsstarttemperatur liegt.

4. Verfahren nach einem der Ansprüche 1 bis 3,
**dadurch gekennzeichnet,**
**dass** die Endvorwärmtemperatur weniger als 5°C unterhalb der Vernetzungsstarttemperatur liegt.

5. Verfahren nach Anspruch 1 oder 2,
**dadurch gekennzeichnet,**
**dass** die Vernetaungsstarttemperatur der Duroplastmasse (06,19) bei ungefähr 70°C liegt und die Endvorwärmtemperatur in einem Bereich von 55°C bis 60°C liegt.

6. Verfahren nach einem der Ansprüche 1 bis 6,
**dadurch gekennzeichnet,**
**dass** die Vorwärmtemperatur der Duroplastmasse (06,19) in einem Regelkreis auf einen Sollwert bzw. eine Sollwertkurve gesteuert oder geregelt wird.

7. Vorwärmeinrichtung (01,02) zur Vorwärmung einer vor- oder unvernetzten, pulverförmigen oder granulatförmigen Duroplastmasse (06,19) bei der Herstellung von Duroplastteilen, die aus der pulverförmigen oder granulatförmigen Duroplastmasse (06,19) nach der Vorwärmung in einer Form unter Zufuhr von Wärme verpresst und durch Vernetzung ausgehärtet werden, wobei an der Vorwärmeinrichtung (01,02) eine steuer- und/oder regelbare Heizeinrichtung (10) zur Aufheizung der Duroplastmasse (06,19) vorgesehen ist und wobei an der Vorwärmeinrichtung (01,02) eine Mischeinrichtung (03,22) zur gleichmäßigen und zeitgleich zur Vorwärmung durchführbaren Durchmischung der Duroplastmasse (06,19) vorgesehen ist, **dadurch gekennzeichnet dass** der Vorwärmeinrichtung (01,02) eine Dosiereinrichtung zur Dosierung der in die Vorwärmeinrichtung (01,02) eingebrachten Duroplastmasse vorgeschaltet ist.

8. Vorwärmeinrichtung nach Anspruch 7,
**dadurch gekennzeichnet,**
**dass** die Mischeinrichtung in der Art eines Rührwerks (03,22) ausgebildet ist.

9. Vorwärmeinrichtung nach Anspruch 8,
**dadurch gekennzeichnet,**
**dass** das Rührwerk (03,22) zumindest einen Rührflügel (04,23) aufweist.

10. Vorwärmeinrichtung nach Anspruch 9,
**dadurch gekennzeichnet,**
**dass** der Rührflügel (04,23) beheizbar ist.

11. Vorwärmeinrichtung nach Anspruch 9 oder 10,
**dadurch gekennzeichnet,**
**dass** der Rührflügel (04,23) zumindest eine Ausnehmung (24,25,26) zum Durchtritt der Duroplastmasse (06,19) aufweist.

12. Vorwärmeinrichtung nach einem der Ansprüche 9 bis 11,
**dadurch gekennzeichnet,**
**dass** der Rührflügel (04,23) spiralförmig ausgebildet ist.

13. Vorwärmeinrichtung nach einem der Ansprüche 9 bis 12,
**dadurch gekennzeichnet,**
**dass** der Rührflügel (04,23) mit einer Drehgeschwindigkeit von ungefähr 30 Umdrehungen pro Minute antreibbar ist.

14. Vorwärmeinrichtung nach einem der Ansprüche 9 bis 13,
**dadurch gekennzeichnet,**
**dass** die Rotationsachse des Rührflügels (04,23) gegenüber der Vertikalen um einen Neigungswinkel geneigt ist.

15. Vorwärmeinrichtung nach Anspruch 14,
**dadurch gekennzeichnet,**
**dass** der Neigungswinkel ungefähr 45° beträgt.

16. Vorwärmeinrichtung nach einem der Ansprüche 7 bis 15,
**dadurch gekennzeichnet,**
**dass** die Vorwärmeinrichtung (01,02) im Kontaktbereich mit der Duroplastmasse (06,19) zumindest bereichsweise mit einer Antihaftbeschichtung beschichtet ist.

17. Vorwärmeinrichtung nach Anspruch 16,
**dadurch gekennzeichnet,**
**dass** die Antihaftbeschichtung durch Härten der Vorwärmeinrichtung (01,02) hergestellt ist.

18. Vorwärmeinrichtung nach einem der Ansprüche 7 bis 17,
**dadurch gekennzeichnet,**
**dass** an der Vorwärmeinrichtung (01,02) ein Sensor (30) zur direkten Messung der Temperatur in der Duroplastmasse (06,19) vorgesehen ist.

## Claims

1. A method for producing thermosetting plastics parts from a pre- or non-cross-linked, powdery or granular thermosetting plastics material (06, 19), the powdery or granular thermosetting plastics material (06, 19) being pressed in a mould while heat is supplied and hardened by cross-linking, the powdery or granular thermosetting plastics material (06, 19) being heated before the pressing in a preheating device (01, 02) by supplying heat up to a final preheating temperature, and the thermosetting plastics material (06, 19) being intermixed with a mixing device at the same time as the preheating,
**characterised**
**in that** there is supplied to the preheating device (01, 02) from a metering device connected upstream precisely the amount of thermosetting plastics material (06) for preheating that corresponds to the amount of thermosetting plastics material (06) required for the subsequent hardening in the mould, and the final preheating temperature is less than 30°C below the cross-linking starting temperature.

2. A method according to Claim 1,
**characterised**
**in that** the final preheating temperature is less than 20°C below the cross-linking starting temperature.

3. A method according to Claim 1 or 2,
**characterised**
**in that** the final preheating temperature is less than 10°C below the cross-linking starting temperature.

4. A method according to one of Claims 1 to 3,
**characterised**
**in that** the final preheating temperature is less than 5°C below the cross-linking starting temperature.

5. A method according to Claim 1 or 2,
**characterised**
**in that** the cross-linking starting temperature of the thermosetting plastics material (06, 19) lies at about 70°C and the final preheating temperature lies within a range of 55°C to 60°C.

6. A method according to one of Claims 1 to 6,
**characterised**
**in that** the preheating temperature of the thermosetting plastics material (06, 19) is controlled or regulated in a regulating circuit to a desired value or a desired value curve.

7. A preheating device (01,02) for preheating a pre- or non-cross-linked, powdery or granular thermosetting plastics material (06, 19) in the production of thermosetting plastics parts which are pressed from the powdery or granular thermosetting plastics material (06, 19) after the preheating in a mould while heat is supplied and hardened by means of cross-linking, a controllable and/or adjustable heating device (10) being provided at the preheating device (01, 02) for heating up the thermosetting plastics material (06, 19), and a mixing device (03, 22) being provided at the preheating device (01, 02) for the uniform intermixing of the thermosetting plastics material (06, 19) which may be implemented at the same time as the preheating,
**characterised in that** a metering device for metering the thermosetting plastics material introduced into the preheating device (01, 02) is connected upstream of the preheating device (01, 02).

8. A preheating device according to Claim 7,
**characterised**
**in that** the mixing device is designed in the manner of a stirrer (03, 22).

9. A preheating device according to Claim 8,
**characterised**
**in that** the stirrer (03, 22) has at least one stirring blade (04, 23).

10. A preheating device according to Claim 9,
**characterised**
**in that** the stirring blade (04, 23) is heatable.

11. A preheating device according to Claim 9 or 10,
**characterised**
**in that** the stirring blade (04, 23) has at least one recess (24, 25, 26) for the passage therethrough of the thermosetting plastics material (06, 19).

12. A preheating device according to one of Claims 9 to 11,
**characterised in that** the stirring blade (04, 23) is designed so as to be helical.

13. A preheating device according to one of Claims 9 to 12,
**characterised**
**in that** the stirring blade (04, 23) may be operated at a rotational speed of about 30 revolutions a minute.

14. A preheating device according to one of Claims 9 to 13,
**characterised**
**in that** the axis of rotation of the stirring blade (04, 23) is inclined at an angle of inclination relative to the vertical.

15. A preheating device according to Claim 14,
**characterised**
**in that** the angle of inclination is about 45°.

16. A preheating device according to one of Claims 7 to 15,
**characterised**
**in that** the preheating device (01, 02) is coated at least in regions with a non-stick coating in the area of contact with the thermosetting plastics material (06, 19).

17. A preheating device according to Claim 16,
**characterised**
**in that** the non-stick coating is produced by hardening the preheating device (01,02).

18. A preheating device according to one of Claims 7 to 17,
**characterised**
**in that** a sensor (30) is provided on the preheating device (01, 02) for directly measuring the temperature in the thermosetting plastics material (06, 19).

## Revendications

1. Procédé pour la fabrication de pièces thermodurcissables à partir d'une masse de matière thermodurcissable pré-réticulée ou non-réticulée, pulvérulente ou granulée (06, 19), la masse de matière thermodurcissable pulvérulente ou granulée (06, 19) étant comprimée dans un moule avec application de chaleur et durcie par réticulation, la masse de matière thermodurcissable pulvérulente ou granulée (06, 19) étant chauffée avant compression dans un dispositif de préchauffage (01, 02) par application de chaleur jusqu'à une température finale de préchauffage, et la masse de matière thermodurcissable (06, 19) étant mélangée par un dispositif mélangeur simultanément au préchauffage, **caractérisé en ce que** la quantité exacte de matière thermodurcissable (06) correspondant à la quantité de matière thermodurcissable (06) nécessitée pour le durcissement consécutif dans le moule est fournie au dispositif de préchauffage (01,02) pour le préchauffage à partir d'un dispositif de dosage situé en amont, et **en ce que** la température finale de préchauffage est inférieure de moins de 30°C à la température initiale de réticulation.

2. Procédé selon la revendication 1, **caractérisé en ce que** la température finale de préchauffage est inférieure de moins de 20°C à la température initiale de réticulation.

3. Procédé selon la revendication 1 ou 2, **caractérisé en ce que** la température finale de préchauffage est inférieure de moins de 10°C à la température initiale de réticulation.

4. Procédé selon l'une des revendications 1 à 3, **caractérisé en ce que** la température finale de préchauffage est inférieure de moins de 5°C à la température initiale de réticulation.

5. Procédé selon la revendication 1 ou 2, **caractérisé en ce que** la température initiale de réticulation de la masse de matière thermodurcissable (06, 19) est de 70°C environ, et la température finale de préchauffage est comprise dans une plage de 55°C à 60°C.

6. Procédé selon l'une des revendications 1 à 6, **caractérisé en ce que** la température de préchauffage de la masse de matière thermodurcissable (06, 19) est commandée ou régulée dans un circuit d'asservissement suivant une valeur de consigne ou une courbe de valeur de consigne.

7. Dispositif de préchauffage (01, 02) pour le préchauffage d'une masse de matière thermodurcissable pré-réticulée ou non-réticulée, pulvérulente ou granulée (06, 19) lors de la fabrication de pièces thermodurcissables à partir de la masse de matière thermodurcissable, pulvérulente ou granulée (06, 19), comprimées après préchauffage dans un moule par application de chaleur et durcies par réticulation, le dispositif de préchauffage (01, 02) comportant un dispositif de chauffage (10) commandable et/ou réglable pour le chauffage de la masse de matière thermodurcissable (06, 19), et un dispositif mélangeur (03, 22) pour le mélange homogène de la masse de matière thermodurcissable (06, 19) simultanément au préchauffage, **caractérisé en ce qu'**un dispositif de dosage est disposé en amont du dispositif de préchauffage (01, 02), pour le dosage de la masse de matière thermodurcissable amenée au dispositif de préchauffage (01, 02).

8. Dispositif de préchauffage selon la revendication 7, **caractérisé en ce que** le dispositif mélangeur se présente sous la forme d'un mécanisme agitateur (03, 22).

9. Dispositif de préchauffage selon la revendication 8, **caractérisé en ce que** le mécanisme agitateur (03, 22) comporte au moins une pale agitatrice (04, 23).

10. Dispositif de préchauffage selon la revendication 9, **caractérisé en ce que** la pale agitatrice (04, 23) est chauffante.

11. Dispositif de préchauffage selon la revendication 9 ou 10, **caractérisé en ce que** la pale agitatrice (04, 23) présente au moins un évidement (24, 25, 26) pour le passage de la masse de matière thermodurcissable (06, 19).

12. Dispositif de préchauffage selon l'une des revendications 9 à 11, **caractérisé en ce que** la pale agitatrice (04, 23) est de forme hélicoïdale.

13. Dispositif de préchauffage selon l'une des revendications 9 à 12, **caractérisé en ce que** la pale agitatrice (04, 23) est susceptible d'être entraînée à une vitesse de rotation de 30 tours par minute environ.

14. Dispositif de préchauffage selon l'une des revendications 9 à 13, **caractérisé en ce que** l'axe de rotation de la pale agitatrice (04, 23) est incliné suivant un angle d'inclinaison par rapport à la verticale.

15. Dispositif de préchauffage selon la revendication 14, **caractérisé en ce que** l'angle d'inclinaison est de 45° environ.

16. Dispositif de préchauffage selon l'une des revendications 7 à 15, **caractérisé en ce que** le dispositif de préchauffage (01, 02) est revêtu au moins partiellement d'une couche anti-adhérente dans la zone de contact avec la masse de matière thermodurcissable (06, 19).

17. Dispositif de préchauffage selon la revendication 16, **caractérisé en ce que** le revêtement anti-adhérent est produit par durcissement par le dispositif de préchauffage (01, 02).

18. Dispositif de préchauffage selon l'une des revendications 7 à 17, **caractérisé en ce qu'**un capteur (30) est prévu sur le dispositif de préchauffage (01, 12) pour la mesure directe de température dans la masse de matière thermodurcissable (06, 19).
